(19) Europäisches Patentamt
European Patent Office
Office européen des brevets

(11) Veröffentlichungsnummer: **0 134 995**
**A2**

# (12) EUROPÄISCHE PATENTANMELDUNG

(21) Anmeldenummer: **84108067.4**

(22) Anmeldetag: **10.07.84**

(51) Int. Cl.⁴: **C 08 F 8/14**

(30) Priorität: **16.07.83 DE 3325738**

(43) Veröffentlichungstag der Anmeldung:
**27.03.85 Patentblatt 85/13**

(84) Benannte Vertragsstaaten:
**BE DE FR IT**

(71) Anmelder: **BASF Aktiengesellschaft**
**Carl-Bosch-Strasse 38**
**D-6700 Ludwigshafen(DE)**

(72) Erfinder: **Klahr, Erhard, Dr.**
**Londoner Ring 11**
**D-6700 Ludwigshafen(DE)**

(72) Erfinder: **Weiss, Stefan, Dr.**
**Carl-Beck-Strasse 46**
**D-6903 Necargemuend(DE)**

(72) Erfinder: **Uhl, Guenter**
**Pfrimmanlage 55**
**D-6520 Worms 1(DE)**

(72) Erfinder: **Fikentscher, Rolf, Dr.**
**Von-Stephan-Strasse 27**
**D-6700 Ludwigshafen(DE)**

(72) Erfinder: **Trapp, Horst, Dr.**
**Johann-Sebastian-Bach-Strasse 10a**
**D-6831 Plankstadt(DE)**

## (54) Wasserlösliche Ester von Polymerisaten der Acrylsäure.

(57) Wasserlösliche Ester von Polymerisaten der Acrylsäure, hergestellt durch Veresterung von Polymerisaten der Acrylsäure eines Molekulargewichts von 500 bis 500.000 mit Ethoxylaten von Fettalkoholen oder Alkylphenolen, die jeweils pro Mol 20 bis 200 mol Ethylenoxid enthalten, im Molverhältnis (a):(b) von 1:0,05 bis 0,5 und Kondensieren des Reaktionsgemisches bis zu Schmelzviskositäten von 200 bis 4000 mPa.s (gemessen mit einem Epprecht-Platte-Kegel-Viskosimeter bei einer Temperatur von 120°C). Die so erhaltenen Reaktionsprodukte werden als Verdickungsmittel für wäßrige Systeme und als Gleitmittel für Polyvinylchlorid verwendet.

EP 0 134 995 A2

Croydon Printing Company Ltd

## Wasserlösliche Ester von Polymerisaten der Acrylsäure

Aus der DE-OS 27 58 122 sind wasserlösliche Copolymerisate bekannt, die

a) 80 bis 2 Gew.% einer ethylenisch ungesättigten $C_3$- bis $C_5$-Carbonsäure, beispielsweise Acrylsäure, und

b) 20 bis 98 Gew.% einer polymerisierbaren ethylenisch ungesättigten Verbindung der Formel

$$R^3{-}O{-}(CH_2{-}CH_2{-}O)_n{-}(CH_2{-}\overset{CH_3}{\overset{|}{C}H}{-}O)_m{-}CO{-}\overset{R^4}{\overset{|}{C}}{=}CH_2,$$

in der $R^3$ = eine Alkylgruppe mit 1 bis 20 C-Atomen oder eine gegebenenfalls $C_1$- bis $C_{12}$-alkylsubstituierte Phenylgruppe, $R^4$ = H oder $-CH_3$, n = 2 bis 100 und m = 0 bis 50 bedeuten,

als charakteristische Monomeren enthalten und durch Polymerisieren der Monomeren hergestellt werden. Die so erhaltenen Copolymerisate werden als Zusatz zu wäßrigen Polymerisatlösungen, Dispersionen oder daraus hergestellten Zubereitungen als Verdickungsmittel verwendet.

Der vorliegenden Erfindung liegt die Aufgabe zugrunde, wasserlösliche Polymerisate zur Verfügung zu stellen, die als Verdickungsmittel für wäßrige Lösungen oder Dispersionen geeignet sind.

Die Aufgabe wird erfindungsgemäß gelöst mit wasserlöslichen Estern von Polymerisaten der Acrylsäure, hergestellt durch Veresterung von

a) Homopolymerisaten der Acrylsäure oder Acrylsäurecopolymerisaten, die bis zu 50 Mol.% monoethylenisch ungesättigte Monomere einpolymerisiert enthalten und die jeweils ein Molekulargewicht von 500 bis 500.000 haben, mit

b) Ethoxylaten von $C_{10}$- bis $C_{22}$-Fettalkoholen oder $C_1$- bis $C_{12}$-Alkylphenolen, die durch Umsetzung von 1 Mol eines entsprechenden Fettalkohols oder Alkylphenols mit 20 bis 200 Mol Ethylenoxid erhältlich sind,

im Äquivalenzverhältnis (a):(b) von 1:0,05 bis 0,5 und anschließendes Erhitzen auf eine Temperatur in den Bereich von 100 bis 200°C, bis die Schmelzviskosität des Reaktionsgemisches 200 bis 4000 mPas (gemessen mit

einem Epprecht-Platte-Kegel-Viskosimeter bei einer Temperatur von 120°C) beträgt. Die wasserlöslichen Verbindungen werden hergestellt, indem man die Komponenten a) und b) in dem oben angegebenen Verhältnis bei Temperaturen von 100 bis 200°C unter Ausschluß von Sauerstoff und Abdestillieren von Wasser verestert und das Reaktionsgemisch danach solange auf eine Temperatur in dem Bereich von 100 bis 200°C erhitzt, bis die Schmelzviskosität des Reaktionsgemisches 200 bis 4.000 mPa.s (gemessen in einem Epprecht-Platte-Kegel-Viskosimeter bei einer Temperatur von 120°C) beträgt. Die wasserlöslichen Ester können als Verdickungsmittel für wäßrige Systeme oder auch als Gleitmittel für Polyvinylchlorid verwendet werden.

Bei der Veresterungsreaktion setzt man als Komponente a) Homopolymerisate der Acrylsäure oder Acrylsäurecopolymerisate ein, die bis zu 50 Mol.% andere ethylenisch ungesättigte Monomere einpolymerisiert enthalten. Verbindungen dieser Art sind bekannt und im Handel erhältlich. Die Copolymerisate der Acrylsäure werden hergestellt, indem man beispielsweise Acrylsäure mit einem oder mehreren ethylenisch ungesättigten Monomeren copolymerisiert. Als Comonomere kommen sämtliche, mit Acrylsäure copolymerisierbare, monoethylenisch ungesättigte Verbindungen in Betracht, z.B. Styrol, Acrylnitril, Vinylester von gesättigten $C_2$- bis $C_{10}$-Carbonsäuren, Acrylsäureester und Methacrylsäureester, die sich jeweils von einwertigen Alkoholen mit 1 bis 5 Kohlenstoffatomen ableiten, Maleinsäureester, Fumarsäureester, Maleinsäureanhydrid, Methacrylsäure, Crotonsäure und Itaconsäure. Der Anteil der Comonomeren im Copolymerisat wird so gewählt, daß in jedem Fall wasserlösliche bzw. in Alkali lösliche Copolymerisate entstehen. Der Gehalt an Comonomeren im Acrylsäurepolymerisat kann daher in einem weiten Bereich, z.B. zwischen 1 und 50 Mol.%, schwanken. Das Molekulargewicht der Homopolymerisate der Acrylsäure und der Copolymerisate der Acrylsäure beträgt 500 bis 500.000 und liegt vorzugsweise in dem Bereich von 1000 bis 100.000. Vorzugsweise verwendet man als Komponente a) Homopolymerisate der Acrylsäure.

Als Komponente b), die bei der Veresterung eingesetzt wird, kommen Ethoxylate in Betracht. Diese Produkte werden erhalten, indem man $C_{10}$- bis $C_{22}$--Fettalkohole oder $C_1$- bis $C_{12}$-Alkylphenole im Molverhältnis 1:20 bis 200 mit Ethylenoxid in bekannter Weise umsetzt. Außer den reinen Ethoxylaten kommen jedoch auch noch Derivate in Betracht, die bis zu 50 Mol pro Mol Fettalkohol oder Alkylphenol bis zu 50 Mol Propylenoxid einpolymerisiert enthalten. Stoffe dieser Art werden hergestellt, indem man die Fettalkohole oder Alkylphenole zunächst mit Propylenoxid und dann mit Ethylenoxid oder in umgekehrter Reihenfolge alkoxyliert. Eine andere Möglichkeit besteht darin, Blockcopolymerisate herzustellen, die Ethylenoxid-, Propylenoxid- und Ethylenoxidblöcke an die Fettalkohole bzw. Alkylphenole angelagert enthalten. Bei der Alkoxylierung der Alkohole bzw. Phenole kann auch mit einem Mischgas aus Ethylenoxid und Propylenoxid gearbeitet werden, so daß man alkoxylierte Verbindungen erhält, in denen Ethylenoxid- und Propylenoxid-Einheiten statistisch verteilt sind. Vorzugsweise verwendet man jedoch Ethylenoxidaddukte an $C_{10}$- bis $C_{22}$-Fettalkohole, die pro Mol Fettalkohol 25 bis 100 Mol Ethylenoxid-Einheiten enthalten. Auch die Verbindungen der Gruppe b) sind wasserlöslich.

Die wasserlöslichen Ester von Polymerisaten der Acrylsäure werden dadurch hergestellt, daß man die oben beschriebenen Komponenten a) und b) im Molverhältnis 1:0,05 bis 0,5 bei Temperaturen von 100 bis 200°C verestert. Während der Veresterungsreaktion werden die Komponenten vorteilhafterweise gemischt, wobei es wesentlich ist, unter Ausschluß von Sauerstoff zu arbeiten. Die Veresterungsreaktion ist daran erkenntlich, daß Wasser gebildet wird, das vorzugsweise kontinuierlich während der Veresterung aus dem Reaktionsgemisch abdestilliert wird. Nach Beendigung der Veresterung wird das Reaktionsgemisch - ebenfalls unter Ausschluß von Sauerstoff - solange auf eine Temperatur in dem Bereich von 100 bis 200°C erhitzt, bis die Schmelzviskosität des Reaktionsgemisches 200 bis 4.000 mPa.s - gemessen mit einem Epprecht-Platte-Kegel-Viskosimeter bei einer Tempertur von 120°C - beträgt. Die Veresterungsreaktion wird vorzugsweise bei Temperaturen in dem Bereich von 140 bis 160°C durchgeführt. Wie bei Veresterungen allgemein üblich, verwendet man Säuren als Katalysator, beispielsweise Schwefelsäure, Salzsäure, Phosphorsäure, p-Toluolsulfonsäure, Natriumhydrogensulfat und Borsäure.

Die Veresterung wird vorzugsweise in Abwesenheit von Lösungsmitteln vorgenommen. Die Komponenten a) und b) können in wasserfreier Form bzw. als wäßrige Lösung bei der Veresterung eingesetzt werden. Sofern man wäßrige Lösungen der Ausgangsstoffe verwendet, muß man, bevor die Veresterung beginnt, das Wasser abdestillieren. Produkte mit vorteilhaften Eigenschaften werden auch dann erhalten, wenn man bei der Veresterung bis zu 50 % der Komponente b) durch einen $C_{10}$- bis $C_{22}$-Fettalkohol ersetzt.

Nachdem das gesamte, bei der Veresterung gebildete Wasser aus dem System abdestilliert ist, beginnt eine Kondensationsreaktion, die daran erkenntlich ist, daß die Viskosität des Reaktionsgemisches ansteigt. Vorzugsweise wird die Kondensation soweit geführt, daß die Schmelz-Viskosität des Reaktionsgemisches 200 bis 4000 mPa.s (Epprecht-Platte-Kegel-Viskosimeter 120°C) beträgt. Bisher liegen keine Untersuchungen darüber vor, welche Struktur den Kondensationsprodukten zukommt. Die Schmelze wird beim Abkühlen fest und kann zu einem Pulver vermahlen werden, das in Wasser quillt oder sich nach Zugabe einer Base auflöst. Beim Auflösen des

festen Reaktionsproduktes in Wasser tritt eine starke Erhöhung der Viskosität der wäßrigen Lösung ein. Die Viskositätserhöhung der wäßrigen Lösungen ist pH-abhängig. Die höchste Verdickungswirkung tritt in dem pH-Bereich von 7,5 bis 9 ein. Die Einstellung des pH-Wertes erfolgt durch Zugabe von beispielsweise Natronlauge, Kalilauge, Ammoniak oder Aminen zu einer Mischung aus Wasser und dem kondensierten Ester, wobei die freien Säuregruppierungen der kondensierten Ester teilneutralisiert werden.

Die veresterten und kondensierten Produkte werden als Verdickungsmittel für wäßrige Systeme verwendet. Die Kondensationsprodukte führen so beispielsweise zu einer Erhöhung der Viskosität bei wäßrigen Polymerlösungen und Dispersionen sowie daraus hergestellten Zubereitungen, wie Farben, Streichmassen, Dichtungs- und Klebemittel.

Die kondensierten Ester aus den Komponenten a) und b) haben vor allen Dingen Bedeutung als Zusatz zu wäßrigen Pigmentdruckpasten, in denen sie ebenfalls als Verdickungsmittel wirken. Bezogen auf die Pigmentdruckpasten werden sie in einer Menge von 0,5 bis 10, vorzugsweise 1 bis 5 Gew.% eingesetzt. Dieser Bereich trifft auch für die anderen Anwendungsgebiete zu, bei denen die verdickende Wirkung der kondensierten Ester ausgenutzt wird.

Die erfindungsgemäß hergestellten Kondensationsprodukte werden außerdem als Gleitmittel für die Polyvinylchloridverarbeitung verwendet. Der Zusatz an Gleitmitteln zu Polyvinylchlorid beträgt 0,05 bis 2 Gew.%, bezogen auf Polyvinylchlorid. Das Gleitmittel bewirkt, daß Polyvinylchlorid besser verarbeitet werden kann, wobei vor allem das Ankleben des Kunststoffs an heiße Teile einer Formgebungsvorrichtung praktisch verhindert wird. Der Zusatz der erfindungsgemäßen Kondensationsprodukte zu Polyvinylchlorid verbessert die Schmelzbarkeit des Polyvinylchlorids und ermöglicht die Herstellung von Folien auf Basis von Polyvinylchlorid mit verbesserter Bedruckbarkeit.

Die Produkte können in fester Form, z.B. als Granulat oder als Pulver vorliegen oder auch zur besseren Handhabung in Wasser gelöst sein. Zur Konfektionierung des Produkts kann man beispielsweise so vorgehen, daß man die Schmelze des Kondensationsprodukts mit festem Natriumhydroxid neutralisiert, z.B. bei Temperaturen in dem Bereich von 120 bis 140°C, danach die Mischung abkühlen läßt und Isopropanol oder Propylenglykol zusetzt. Durch Zugabe von Wasser kann das Produkt auf einen Feststoffgehalt von etwa 50 Gew.% eingestellt werden.

Die in den Beispielen angegebenen Teile sind Gewichtsteile. Die Angaben in Prozent beziehen sich auf das Gewicht der Stoffe. Die Molekulargewichte der Polyacrylsäure bzw. der Acrylsäurecopolymerisate, die oben und in den Beispielen angegeben sind, wurden kryoskopisch bestimmt. Die Schmelzviskosität der Produkte wurde mit einem Epprecht-Platte-Kegel-Viskosimeter bei einer Temperatur von 120°C gemessen. Diese Angaben beziehen sich jeweils auf die 100 %igen Produkte.

Beispiel 1

In einem Kondensationsgefäß, das mit einem Rührer, Thermometer, Stickstoffeinlaß- und -auslaßvorrichtungen versehen ist, wurden 28,8 g einer 50 %igen wäßrigen Lösung eines Homopolymerisates der Acrylsäure mit einem Molekulargewicht von 5.000 (0,2 Mol), 465 g eines Umsetzungsproduktes aus einem Mol eines $C_{16}$-/$C_{18}$-Fettalkoholgemisches und 100 Mol Ethylenoxid (0,1 Mol) und 4,6 g p-Toluolsulfonsäure vorgelegt und unter Stickstoffatmosphäre und Rühren auf eine Temperatur von 140°C erhitzt. Dabei destillierte zunächst das aus der Acrylsäure stammende Wasser und daran anschließend das bei der Veresterung entstandene Wasser ab. Nachdem man das Reaktionsgemisch ca. 2 Stunden bei einer Temperatur von 140°C gerührt hatte, war die Veresterung beendet. Danach setzte die Kondensation ein, die an einer Erhöhung der Viskosität der Reaktionsmischung erkenntlich ist. Nachdem man das Gemisch insgesamt 13 Stunden bei einer Temperatur von 140°C gerührt hatte, betrug die Viskosität 2500 mPa.s. Man gab 4,6 g Natriumhydroxid zu und rührte das Reaktionsgemisch noch 10 min bei einer Temperatur von 140°C. Danach wurde es abgekühlt.

Eine 2,5 %ige wäßrige Lösung des Reaktionsproduktes hatte bei einem pH-Wert von 8,5 eine Viskosität von 15.000 mPa.s.

Beispiel 2

In der in Beispiel 1 beschriebenen Apparatur wurden 288 g einer 50 %igen wäßrigen Polyacrylsäure vom Molekulargewicht 5.000 (2 Mol), 465 g eines Umsetzungsproduktes aus einer Mischung eines $C_{16}$-/$C_{18}$-Fettalkohols und Ethylenoxid im Molverhältnis 1:100 und 4,6 g p-Toluolsulfonsäure vorgelegt. Die Mischung wurde, wie in Beispiel 1 beschrieben, unter Stickstoffatmosphäre und unter Rühren auf eine Temperatur von 140°C erhitzt. Nachdem das aus der Polyacrylsäure stammende und das bei der Veresterung entstehende Wasser abdestilliert war, wurde die Mischung noch 2 Stunden bei einer Temperatur von 140°C gerührt. Die gesamte Reaktionsdauer betrug 4 Stunden. Das Reaktionsgemisch hatte nach dieser Zeit eine Viskosität

von 2.500 mPa.s. Es wurde dann mit 7 g festem Natriumhydroxid neutralisiert. Eine 2,5 %ige wäßrige Lösung des Produktes hatte bei einem pH-Wert von 8,5 eine Viskosität von 800 mPa.s.

Beispiel 3

288 g (2 Mol) einer 50 %igen wäßrigen Lösung von Polyacrylsäure eines Molekulargewichts von 5.000, 492 g (0,2 Mol) eines Umsetzungsproduktes einer Mischung von $C_{16}$-/$C_{18}$-Fettalkoholen mit Ethylenoxid im Molverhältnis 1:50 und 4,9 g p-Toluolsulfonsäure wurden in der in Beispiel 1 angegebenen Apparatur unter Stickstoffatmosphäre umgesetzt. Die Veresterung sowie die daraus folgende Kondensation wurden bei einer Temperatur von 140°C durchgeführt. Die Reaktionsdauer betrug insgesamt 33 Stunden. Danach wurde das Reaktionsgemisch mit 4,9 g fester Natronlauge versetzt. Eine 2,5 %ige wäßrige Lösung des Reaktionsproduktes hatte bei einem pH--Wert von 8,5 eine Viskosität von 50 mPa.s. Das Kondensationsprodukt ist als Gleitmittel für Polyvinylchlorid einsetzbar.

Beispiel 4

In der in Beispiel 1 beschriebenen Apparatur wurden 144 g (0,5 Mol) einer 50 %igen wäßrigen Lösung von Polyacrylsäure eines Molekulargewichts von 5.000, 465 g eines Umsetzungsproduktes aus einer Mischung aus einem $C_{16}$-/$C_{18}$-Fettalkohol und Ethylenoxid im Molverhältnis 1:100 (0,1 Mol), und 4,7 g p-Toluolsulfonsäure unter den in Beispiel 1 angegebenen Reaktionsbedingungen umgesetzt. Die gesamte Dauer der Reaktion betrug 12 Stunden. Das Reaktionsgemisch wurde mit 5,8 g festem Natriumhydroxid versetzt. Eine 2,5 %ige wäßrige Lösung des Reaktionsproduktes hatte bei einem pH--Wert von 8,5 eine Viskosität von 9 mPa.s. Das Kondensationsprodukt ist als Gleitmittel für die Polyvinylchloridverarbeitung einsetzbar.

Beispiel 5

Beispiel 4 wurde mit den Ausnahmen wiederholt, daß man anstelle der Polyacrylsäure 31,6 g (0,4 Mol) eines Copolymerisates aus 50 % Acrylsäure und 50 % Acrylsäuremethylester vom Molekulargewicht 10000 einsetzte und die Reaktionszeit auf 32 Stunden erhöhte. Eine 2,5 %ige wäßrige Lösung hatte bei einem pH-Wert von 8,5 eine Viskosität von 48 mPa.s. Das Kondensationsprodukt wird als Gleitmittel für Polyvinylchlorid verwendet.

## Anwendungstechnische Beispiele

### Beispiel 6

| | |
|---|---|
| 20 Gew.-Teile | des gemäß Beispiel 1 hergestellten Kondensationsprodukts werden in 280 Gew.-Teilen Wasser gelöst. In diese Lösung emulgiert man unter hochtourigem Rühren |
| 550 Gew.-Teile | eines Benzins vom Siedebereich 140 bis 200°C. Man erhält eine hochviskose Verdickung, in die nacheinander |
| 120 Gew.-Teile | einer 40 %igen, wäßrigen Dispersion eines Copolymerisats aus 60 % n-Butylacrylat, 30 % Styrol, 3 % Acrylnitril, 2 % Acrylsäure und 5 % N-Methylolacrylamid und |
| 30 Gew.-Teile | eines 32 %igen, wäßrigen Farbstoffteiges von Phthalocyaninblau (C.I. 74160) eingerührt werden, bis eine homogene Verteilung erreicht ist. |
| 1000 Gew.-Teile | |

Man erhält so eine hochviskose Pigmentdruckpaste, die in üblicher Weise auf alle bekannten Substrate appliziert werden kann. Druckpasten dieser Art können zur Modifikation von Lauf- und/oder Anwendungseigenschaften die im Pigmentdruck üblichen und allgemein bekannten Hilfsmittel unbeschadet zugesetzt werden wie z.B. Griffmoderatoren, wäßrige Vorkondensate, Vernetzer, Katalysatoren, Wasserretentionsmittel und im Austausch mit der im Beispiel genannten Dispersion anders aufgebaute Pigmentbindemittel der verschiedensten Provenienz. Auch natürliche und synthetische Verdickungsmittel können mitverwendet werden.

### Beispiel 7

Das gemäß Beispiel 3 hergestellte Kondensationsprodukt ist als innerlich und äußerlich wirkendes Polyvinylchlorid (PVC)-Gleitmittel sehr geeignet, insbesondere bei der Verarbeitung von Hart-PVC auf dem Kalander. Bei der Kalander-Folien-Verarbeitung von Hart-PVC kommt es sehr darauf an, daß das Polymere nicht an den heißen Metalloberflächen anklebt. Das Ankleben von PVC-Folien an heißen Metalloberflächen wird verhindert, indem man dem PVC Gleitmittel zusetzt. Die Trennwirkung eines PVC-Gleitmittels kann beispielsweise durch den sogenannten Anklebetest geprüft werden, indem man beispielsweise PVC mit einem K-Wert von 61, das mit 1,2 % Dibutylzinnmercaptid stabilisiert ist und 0,3 % des Kondensationsproduktes gemäß Beispiel 3 enthält, bei einer Temperatur von 180 bzw. 200°C an der Mischwalze eines Kalanders verarbeitet. Es wird dabei die Zeit ermittelt, bis das Walzfell an den Kalanderwalzen anklebt. Für die vorstehend beschriebene Mischung war dies bei einer Verarbeitungstemperatur von 180°C nach

über 45 Minuten der Fall, während diese Mischung ohne Gleitmitteleinsatz bei 200°C nach einer Zeit von 25 Minuten anfing, an den Kalanderwalzen zu haften.

Das gemäß Beispiel 3 hergestellte Kondensationsprodukt ist außerdem geeignet, die Hydrophilie von PVC-Oberflächen zu verbessern. Bekanntlich können nämlich stark äußerlich wirkende PVC-Gleitmittel die Bedruckbarkeit von PVC-Erzeugnissen, z.B. Folien, stark herabsetzen. Das im Beispiel 3 beschriebene Produkt, das auf PVC als schwach äußeres Gleitmittel wirkt, beeinflußt die Bedruckbarkeit von aus diesen Mischungen hergestellten PVC-Folien überraschenderweise sehr positiv. Die Prüfung der Bedruckbarkeit wurde nach DIN 53 364 ermittelt. Das Kondensationsprodukt gemäß Beispiel 3 verbessert beispielsweise die Oberflächenspannung von Hart-PVC-Folien um 4 bis 6 dyn/cm. Eine Folie, die aus einem PVC hergestellt wurde, das 1 % eines stark äußerlich wirkenden Gleitmittels enthielt, hatte eine Oberflächenspannung von 38 dyn/cm, während eine Folie aus dem gleichen PVC, das jedoch anstelle des bekannten Gleitmittels 1 % des Kondensationsproduktes gemäß Beispiel 3 enthielt, hatte dagegen eine Oberflächenspannung von 44 dyn/cm.

Patentansprüche

1. Wasserlösliche Ester von Polymerisaten der Acrylsäure, hergestellt durch Veresterung von

a) Homopolymerisaten der Polyacrylsäure oder Acrylsäurecopolymerisaten, die bis zu 50 Mol.% monoethylenisch ungesättigte Monomeren einpolymerisiert enthalten und die jeweils ein Molekulargewicht von 500 bis 500.000 haben, mit

b) Ethoxylaten von $C_{10}$- bis $C_{22}$-Fettalkoholen oder $C_1$- bis $C_{12}$--Alkylphenolen, die durch Umsetzung von 1 Mol eines entsprechenden Fettalkohols oder Alkylphenols mit 20 bis 200 Mol Ethylenoxid erhältlich sind,

im Äquivalenzverhältnis (a):(b) von 1:0,05 bis 0,5 und anschließendes Erhitzen auf eine Temperatur in dem Bereich von 100 bis 200°C, bis die Schmelzviskosität des Reaktionsgemisches 200 bis 4000 mPas (gemessen mit einem Epprecht-Platte-Kegel-Viskosimeter bei einer Temperatur von 120°C) beträgt.

2. Verfahren zur Herstellung wasserlöslicher Ester von Polymerisaten der Acrylsäure nach Anspruch 1, dadurch gekennzeichnet, daß man

a) Homopolymerisate der Acrylsäure oder Acrylsäurecopolymerisate, die bis zu 50 Mol.% monoethylenisch ungesättigte Monomere einpolymerisiert enthalten und die jeweils ein Molekulargewicht von 500 bis 500.000 haben, mit

b) Ethoxylaten von $C_{10}$- bis $C_{22}$-Fettalkoholen oder $C_1$- bis $C_{12}$--Alkylphenolen, die durch Umsetzung von 1 Mol eines entsprechenden Fettalkohols oder Alkylphenols mit 20 bis 200 Mol Ethylenoxid erhältlich sind,

im Äquivalenzverhältnis (a):(b) von 1:0,05 bis 0,5 bei Temperaturen von 100 bis 200°C unter Ausschluß von Sauerstoff und Abdestillieren von Wasser verestert und das Reaktionsgemisch danach solange auf eine Temperatur in dem Bereich von 100 bis 200°C erhitzt, bis die Schmelzviskosität des Reaktionsgemisches 200 bis 4.000 mPa.s (gemessen mit einem Epprecht-Platte-Kegel-Viskosimeter bei einer Temperatur von 120°C) beträgt.

0134995

3. Verfahren nach Anspruch 2, dadurch gekennzeichnet, daß man bis zu 50 Gew.% der Komponente (b) durch einen $C_{10}$- bis $C_{22}$-Fettalkohol ersetzt.

4. Verfahren nach Anspruch 2, dadurch gekennzeichnet, daß als Komponente (a) Copolymerisate der Acrylsäure mit Styrol, Acrylsäureestern von Alkoholen mit 1 bis 5 Kohlenstoffatomen, Acrylnitril, Maleinsäureanhydrid und Methacrylsäure eingesetzt wird.

5. Verwendung der wasserlöslichen Ester von Polymerisaten der Acrylsäure nach Anspruch 1 als Verdickungsmittel für wäßrige Systeme.

6. Verwendung der wasserlöslichen Ester von Polymerisaten der Acrylsäure nach Anspruch 1 als Gleitmittel für Polyvinylchlorid.